# FASCICULE DE BREVET EUROPEEN

(11) **EP 1 889 560 B1**
(45) Date de publication et mention de la délivrance du brevet: **07.07.2010**
(21) Numéro de dépôt: 07290943.5
(22) Date de dépôt: 26.07.2007
(51) Int. Cl.: A47J 43/10, A47J 43/28

(54) **Fouet, notamment à usage culinaire**
Rührbesen, insbesondere für den Küchengebrauch
Whisk, especially for culinary use

(30) Priorité: 18.08.2006 FR 0607387
(43) Date de publication de la demande: 20.02.2008
(73) Titulaire: Mastrad, 75012 Paris (FR)
(72) Inventeur: Lion, Mathieu, 75020 Paris (FR)
(74) Mandataire: Plaçais, Jean Yves

(56) Documents cités:
- EP-A- 0 187 208
- EP-A- 1 683 455
- FR-A1- 2 805 725
- US-A- 4 231 128

## Description

L'invention concerne les fouets, notamment à usage culinaire, pour brasser un mélange dans un récipient.

Le document EP 0 187 208 divulgue un fouet classique avec un manche sur lequel est monté un faisceau de brins constituant la partie active du fouet. Cette partie active présente une forme généralement piriforme, adaptée pour optimiser le brassage du mélange.

Lorsque l'utilisateur du fouet interrompt l'opération de brassage du mélange pour une période plus ou moins longue, il repose en général le fouet sur la surface de support du récipient, sur une assiette ou directement dans le récipient, pour le garder à portée de main. Lorsque le fouet est reposé à l'extérieur du récipient, la quantité de mélange qui a adhéré sur les brins de la partie active du fouet, lors de sa dernière utilisation, coule sur la surface de support du récipient. Cette quantité est ainsi perdue. Lorsque le fouet est reposé à l'intérieur du récipient, aucune quantité de mélange n'est perdue. Toutefois, il arrive que le fouet glisse dans le mélange.

Pour éviter de tels inconvénients, il est connu d'utiliser des éléments de support additionnels que l'utilisateur vient fixer sur le rebord du récipient, à chaque fois qu'il s'apprête à utiliser le fouet. Cependant, de tels éléments sont prévus pour des ustensiles à manche long et fin, souvent des ustensiles de service de plats, et sont donc inadaptés aux fouets. Par ailleurs, ces éléments de support ne sont pas toujours à portée de main de l'utilisateur, de sorte qu'ils peuvent être oubliés ou égarés. En outre, leur positionnement sur le récipient et leur retrait compliquent et rallongent l'opération de mélange.

D'autres réalisations connues, dans le domaine des ustensiles de cuisines, prévoient un crochet ouvert sur le manche de l'ustensile. Le crochet permet d'empêcher que l'ustensile, lorsqu'il est posé dans un récipient, ne glisse et tombe dans celui-ci. De telles réalisations sont là encore prévues pour des ustensiles à manche long et fin, qui ne sont saisis par l'utilisateur que pour le service de plats, comme par exemple des louches ou des cuillères. Ils ne sont donc pas adaptés à la structure et au fonctionnement particulier des fouets, qui présentent un manche relativement court : un fouet est saisi par l'utilisateur sur une grande partie de sa longueur, et est manié d'une manière et dans des conditions bien spécifiques.

L'invention vient améliorer la situation.

A cet effet, elle propose un fouet, notamment à usage culinaire, comprenant un manche et une partie active de forme générale sensiblement piriforme, montée sur le manche, et comprenant des brins distribués. L'invention prévoit une patte de fixation montée sur le manche, possédant une partie d'extrémité spatulée, au niveau de son extrémité libre, qui vient sensiblement en appui sur la partie active du fouet (ou l'enveloppe de celle-ci), tandis que la patte de fixation présente entre ses deux extrémités une forme coudée dont la concavité est tournée vers l'intérieur du fouet.

Le fouet de l'invention peut ainsi être maintenu à l'intérieur du récipient en équilibre stable, sans risque qu'il ne glisse, indépendamment de l'épaisseur du récipient, et du fait que celui-ci qu'il a ou non un rebord marqué ou renforcé, et indépendamment du matériau ou de l'angle du récipient ainsi que de l'angle qu'il forme sur la verticale au voisinage de son rebord.

Des caractéristiques optionnelles de la pièce selon l'invention, complémentaires ou de substitution, sont énoncées ci-après :
- certains au moins des brins sont repliés de manière à délimiter à l'une de leurs extrémités une boucle.
- La patte de fixation est conformée, placée et fixée pour produire un rappel élastique contre la partie active du fouet, avec des caractéristiques choisies d'élasticité et de flexibilité entre son extrémité libre et cette partie active du fouet, ou l'enveloppe géométrique de celle-ci, compte tenu de sa rigidité en flexion.
- Lesdites caractéristiques d'élasticité et de flexibilité de la patte de fixation sont choisies compte tenu de la rigidité en flexion de la partie active du fouet, au voisinage de l'extrémité libre de la patte.
- La patte de fixation se présente sous la forme d'un brin court, simple, ou replié de manière à former une boucle sur son extrémité libre.
- La patte de fixation comprend deux branches sensiblement parallèles.
- La patte de fixation est formée d'une pièce pleine.
- L'extrémité libre de la patte de fixation est recourbée vers l'extérieur du fouet.
- La partie d'extrémité spatulée de la patte de fixation s'appuie sur au moins un brin du faisceau.
- La patte de fixation est au moins partiellement constituée du même matériau que lesdits brins du faisceau.
- Le manche est au moins partiellement réalisé en matériau silicone, tel que du caoutchouc silicone.
- L'extrémité libre du manche est creusée en forme de spatule ou racloir à bords périphériques francs.
- Les brins de faisceau et/ou la patte de fixation sont tenus dans le manche par l'une au moins des techniques du groupe: encliquetage, soudage et/ou collage.
- Les brins du faisceau sont distribués radialement autour de l'axe du manche et la partie d'extrémité spatulée de la patte de fixation s'appuie sur les branches adjacentes de deux brins distincts.
- Les brins du faisceau sont distribués dans des plans verticaux passant par l'axe du manche et parallèles entre eux tandis que la partie d'extrémité spatulée de la patte de fixation s'appuie sur les branches adjacentes d'un même brin.

D'autres caractéristiques et avantages de l'invention apparaîtront à l'examen de la description détaillée ci-après et des dessins annexés sur lesquels :
- la figure 1 est une vue en perspective d'un fouet, selon un premier mode de réalisation de l'invention ;
- la figure 1A est un détail faisant mieux apparaître des angles de la patte 4 de la figure 1 ;
- la figure 2 est une vue agrandie de la patte de fixation, selon le premier mode de réalisation de l'invention ;
- la figure 3 est une vue en perspective du fouet en position de fixation sur un récipient culinaire, selon le premier mode de réalisation de l'invention ;
- la figure 4 est une vue agrandie de l'extrémité du manche représenté sur la figure 1,
- la figure 5 est une vue de côté d'un fouet, selon un deuxième mode de réalisation de l'invention ;
- la figure 6 est une vue de face du fouet, selon la deuxième mode de réalisation de l'invention ;
- les figures 7A à 7C sont trois vues illustrant en plus de détails un exemple de fixation sur le manche ;
- les figures 8A à 8D sont quatre vues illustrant un autre mode de réalisation de l'invention, respectivement en perspective, sur un détail, en vue de dessus et en vue de profil ; et
- les figures 9A à 9D sont quatre vues illustrant encore un autre mode de réalisation de l'invention, respectivement en perspective, sur un détail, en vue de dessus et en vue de profil.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

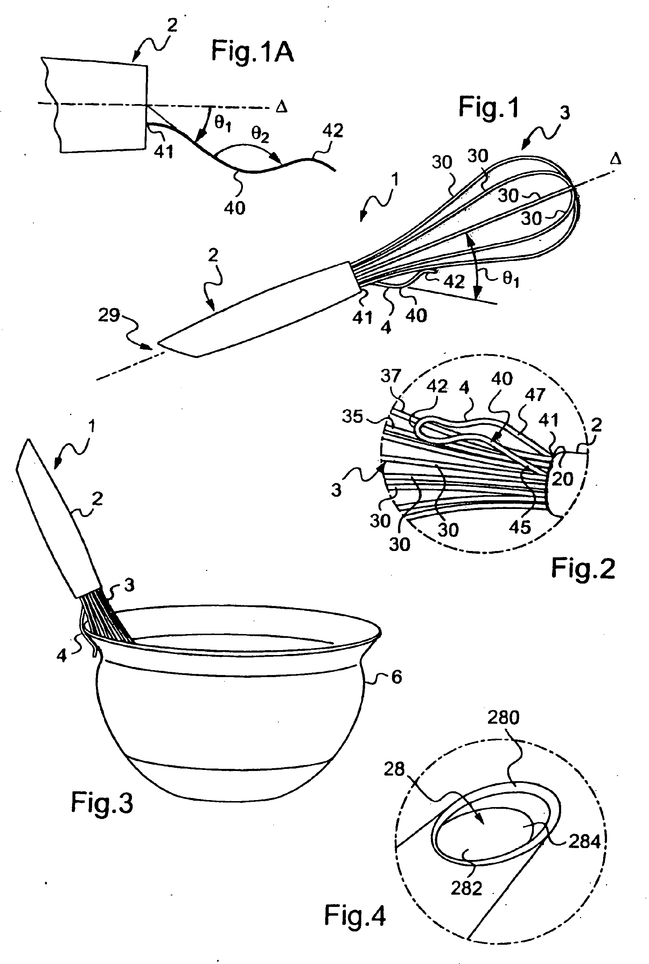

Il est tout d'abord fait référence à la figure 1 qui représente un ustensile de cuisine 1 conforme à l'invention. L'ustensile de cuisine comporte un manche et une partie active. Ici, s'agissant d'un fouet, la partie active est un faisceau de brins monté sur le manche. Elle présente une allure générale piriforme, adaptée pour optimiser le brassage d'une préparation composée.

Le fouet 1 comporte un manche 2 d'axe Δ par lequel le fouet peut être saisi par un utilisateur et une partie active constituée d'un faisceau 3 de brins semi-rigides de forme générale piriforme. Le faisceau est adapté pour mélanger tout type de préparation, par exemple une préparation culinaire tel qu'une pâte liquide ou une sauce.

Le faisceau 3 présente un ensemble de brins 30 en forme de boucles qui sont répartis autour de l'axe A du manche selon une distribution choisie.

Le faisceau 3 de brins est raccordé au manche 2 au moyen d'un système de raccord, qui est fixe, placé entre le manche 2 et la partie active 3.

En complément optionnel intéressant, le manche 2 présente une extrémité libre 29 creusée en forme de spatule ou de racloir 28, pour pouvoir racler le fond du récipient 6, comme représenté sur la figure 4. L'extrémité libre du manche présente alors des bords périphériques francs, formant une couronne ovale 280, oblique par rapport au fond 282 du racloir 28, qui lui-même est sensiblement perpendiculaire à l'axe longitudinal Δ du manche. Un côté du fond 282 affleure la couronne ovale 280, laquelle est intérieurement sensiblement cylindrique avec un raccordement 284 vers le fond 282.

L'invention prévoit en outre une patte de fixation 4 représentée sur la figure 2, plus en détail. La patte de fixation 4 est adaptée pour maintenir le fouet à cheval sur le rebord d'un récipient 6, par exemple un saladier, lorsque l'utilisateur souhaite interrompre l'opération de mélange, pendant une période de temps plus ou moins longue.

La figure 3 représente le fouet 1 dans sa position de fixation sur un tel récipient 6. Dans cette position, le rebord du récipient 6 est reçu entre la partie active 3 du fouet et la patte de fixation 4. Plus précisément, on peut considérer qu'il suit à peu près l'enveloppe géométrique de la partie active du fouet. De cette manière, le fouet 1 reste en équilibre stable, à portée de main pour un éventuel usage ultérieur, sans risque que le fouet ne plonge indûment dans le mélange, ni ne glisse entièrement dans le récipient. La quantité de mélange qui a éventuellement adhéré sur les brins du fouet, lors de sa dernière utilisation, peut ainsi s'écouler directement dans le fond du récipient. Il n'y a donc aucune perte de mélange. Par ailleurs, il n'est plus utile de prévoir un ustensile de support supplémentaire, tel qu'une assiette, pour y poser le fouet.

La patte de fixation 4 possède une partie d'extrémité spatulée au niveau de son extrémité libre 42, qui vient en appui sur la partie active 3 du fouet. Cette partie d'extrémité est courbée vers l'intérieur du fouet de manière à enserrer le rebord du récipient 6 entre la partie active 3 du fouet et la patte de fixation 4, lorsque le fouet est fixé sur le récipient 6.

Sur son autre extrémité, la patte de fixation 4 est emmanchée dans le manche 2, selon un raccord fixe.

Entre ses deux extrémités, la patte de fixation 4 présente une forme coudée 40 dont la concavité est tournée vers l'intérieur du fouet. La patte 4 comporte ainsi deux parties situées de part et d'autre de la forme coudée 40.

Comme représenté sur la figure 2, la partie de la patte de fixation située entre la forme coudée 40 et l'extrémité emmanchée 41 de la patte est courbée vers l'extérieur du manche et forme un angle θ1 par rapport à l'axe A du manche 2. L'angle θ1 est de préférence compris entre environ 30° et environ 90° pour l'application au fouet. La partie de la patte de fixation 4 située entre la forme coudée 40 et l'extrémité libre 42 est courbée vers l'intérieur du fouet. On définit un angle au sommet θ2 entre les directions générales 40-41 d'une part et 40-42 d'autre part. L'angle θ2 est choisi au vu de θ1 pour assurer une fixation optimale du fouet, avec un bon rappel élastique, mais sans arcboutement au retrait du fouet, sur tous types de récipients dont l'épaisseur peut s'étendre entre 0 et 40 mm: A titre préférentiel, on considère actuellement que l'angle θ2 peut aller d'environ 90° à environ 135°, du moins pour la géométrie du fouet selon la Figure 1.

La patte de fixation 4 peut être au moins partiellement constituée du même matériau que les brins 30 du faisceau 3. Ici, elle est constituée du même matériau.

La patte de fixation 4 du fouet est avantageusement conformée pour produire un rappel élastique entre son extrémité libre 42 et la partie active 3 du fouet. Elle est notamment suffisamment élastique et flexible pour permettre l'insertion du rebord du récipient entre la partie active du fouet et la face intérieure de la patte de fixation 4 tout en assurant une fixation en équilibre stable du fouet sur le récipient, en choisissant la nature et l'épaisseur du matériau utilisés pour les brins 4 et 30, compte tenu des autres caractéristiques massiques de l'ustensile de cuisine.

Le rappel élastique qui s'exerce entre la patte 4 et la partie active 3 est ajusté compte tenu du mode de fixation de la patte 4 sur la partie active 3 et/ou sur le manche 2, des formes et matériaux respectifs de ces pièces, et des angles formés par la patte d'une part du côté de sa fixation (θ1), d'autre part du côté où elle avoisine l'enveloppe géométrique de la partie active du fouet et/ou vient au contact des éléments de celle-ci (θ2).

L'élasticité de la patte de fixation 4 permet le placement du fouet sur tout type de récipient, tel que saladier, casserole, récipient dit "cul de poule", etc.

Dans l'exemple du fouet, la longueur de la patte est d'environ 40 mm. soit environ le tiers de la longueur du faisceau de brins. Plus généralement, il semble préférable qu'elle ne monte pas nettement au dessus des deux cinquièmes de cette longueur. D'autre part, il semble préférable qu'elle ne descende pas nettement en dessous du quart de cette longueur, du moins dans l'application au fouet de cuisine.

Lorsque l'utilisateur procède à la fixation du fouet 1 Sur le récipient 6, la patte 4 s'écarte tout d'abord légèrement de partie active 3 pour recevoir le rebord du récipient 6, dans la fente ainsi formée, puis revient élastiquement contre la paroi externe du rebord du récipient de manière à l'enserrer étroitement.

La patte de fixation 4 se présente en particulier sous la forme d'un brin court replié de manière à former une boucle au niveau de l'extrémité libre 42. La boucle de la patte de fixation 4 est courbée vers l'intérieur du fouet 1 de manière à définir la partie d'extrémité spatulée au niveau de l'extrémité libre 42.

En référence à la figure 2, la patte de fixation 4 présente, dans cette forme de réalisation particulière, deux branches sensiblement parallèles 45 et 47 qui, d'une part, sont raccordées au manche 2 et qui, d'autre part, se rejoignent pour former la boucle de la patte de fixation 4.

La patte de fixation 4 a par conséquent une forme générale analogue à celle des brins 30 du faisceau 3 sur lequel elle vient s'appuyer. L'invention prévoit en outre de former la patte de fixation 4 de manière analogue aux brins 30 de la partie active, tant en ce qui concerne le matériau utilisé que le raccordement au manche 2.

Les brins de la partie active du fouet sont ici composés de fil d'acier, surmoulé, par exemple par extrusion, de "silicone" (un matériau silicone tel que du caoutchouc silicone utilisé pour les ustensiles culinaires). La Demanderesse a observé que, pour des récipients culinaires en acier, le contact silicone sur acier donne une bien meilleure accroche ("grip") que le contact acier sur acier.

En complément, l'extrémité libre 42 de la patte de fixation 4 peut être légèrement recourbée vers l'extérieur du fouet, pour faciliter l'insertion du rebord du récipient 6 entre la patte 4 et la partie active 3 du fouet, ainsi que le retrait du fouet.

Le rappel élastique produit par la patte de fixation 4 permet d'assurer un équilibre stable du fouet sur le rebord du récipient 6, même si les points de contact entre la partie d'extrémité spatulée de la patte de fixation 4 et la partie active 3 du fouet sont situés au-dessous du centre de gravité du fouet, lequel est assez haut compte tenu de la légèreté des brins par rapport au manche. Comme représenté sur la figure 3, le fouet peut ainsi rester dans sa position de fixation sans risque qu'il ne retombe dans le récipient 6, indépendamment de la position du centre de gravité du fouet, de l'inclinaison éventuelle du récipient, et/ou de son épaisseur (rebord compris, le cas échéant), et/ou de sa matière (métal, matière synthétique, bois ou céramique).

En cuisine, un instrument tel qu'un fouet a vocation à servir à des applications diverses :
- agir sur une composition chaude dans une casserole en cours de chauffe sur un feu ;
- agir sur une composition chaude dans un plat de cuisson dans un four ou sortant du four ;
- agir sur une matière chaude ou froide salissante pour les vêtements, les nappes de table, ou autres ;
- agir sur une matière chaude ou froide présente dans un récipient tenu à la main, tandis que la personne se déplace, avec le plus souvent la nécessité de transporter d'autres éléments (autre plat, couverts, boissons, notamment).

L'action est souvent à répéter. Dans certains cas au moins, il faut sortir le fouet du mélange, en le gardant en l'état avant l'action suivante (sans le nettoyer, ni non plus le mettre en contact avec d'autres matières susceptibles de perturber le mélange). Il n'existe guère de solution satisfaisante. Poser le fouet dans une assiette propre encombre l'espace de travail, et tend à refroidir le fouet. Munir le fouet, comme certaines cuillers à confiture, d'un crochet ouvert ne convient pas du tout : d'une part un tel crochet s'adapte difficilement aux rebords très différents des nombreux types de récipients utilisables pour faire un mélange ; d'autre part le crochet devrait être placé haut sur le manche pour des raisons de stabilité du fouet accroché sur le bord et pendant vers l'intérieur, mais alors, pour la plupart des récipients, la partie active de l'instrument restera plongée dans le mélange, ce qui est indésiré, voir néfaste au résultat recherché. Pour des récipients peu profonds, l'accrochage est même impossible. La Demanderesse a songé à un montage du genre mini-pince à linge, accolé à l'instrument culinaire. Mais cela ne convient pas non plus, car le ressort, susceptible de s'oxyder au lavage en machine, serait source de salissure, et de perturbation du mélange, surtout dans le cas d'émulsions très sensibles. Par ailleurs, on imagine mal comment monter une telle mini-pince à linge sur les brins d'un fouet, assez près de l'extrémité de sa partie active pour préserver la stabilité requise, telle que définie plus haut.

En bref, avant la présente proposition, il n'existait pas de solution générale satisfaisante, convenant pour pratiquement tous les cas d'applications domestiques. Avec la présente proposition, il devient possible de laisser l'instrument culinaire accroché sur le rebord du récipient, et pendant vers l'intérieur dans tous les cas où cela est souhaité, sans que le fouet ne reste au contact du mélange là où c'est indésiré ou néfaste. Ceci vaut pour de nombreux types de récipients.

Dans la forme de réalisation représentée sur les figures 1 à 3, les brins 30 de la partie active du fouet sont distribués radialement autour de l'axe Δ du manche 2. La partie d'extrémité spatulée de la patte de fixation 4 vient alors s'appuyer sur les branches adjacentes 35 et 37 de deux brins distincts du faisceau 3, qui sont situées du même côté que la patte de fixation 4. Dans cette forme de réalisation, les brins 30 de la partie active du fouet sont conformés pour se croiser au niveau de l'extrémité libre de la partie active 3 au niveau de l'axe Δ du manche 2. Par ailleurs, la partie active 3 du fouet a une forme généralement conique sur une première partie qui part de l'extrémité de raccord 20 du manche 2 jusqu'à un point de la partie active 3 et une forme généralement hémisphérique sur une deuxième partie qui part de ce point de la partie active 3 et se termine au niveau de l'extrémité libre de la partie active 3 du fouet.

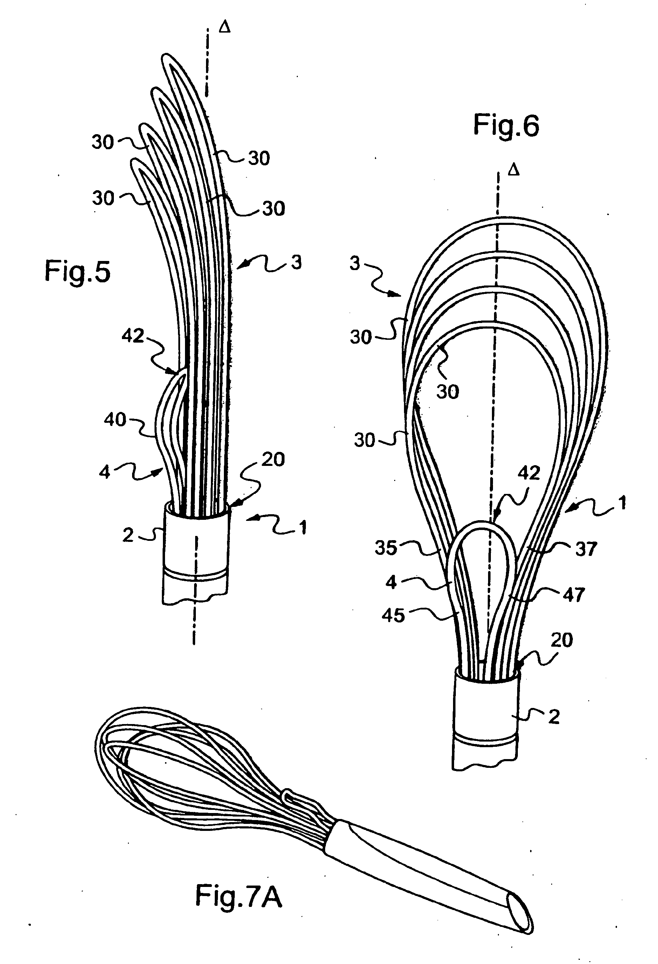

Dans une variante de forme de réalisation, les brins 30 de la partie active 3 du fouet sont distribués dans des plans sensiblement verticaux passant, au voisinage de l'axe du manche A, et parallèles entre eux, comme représenté sur les figures 5 et 6. Comme on peut le voir sur ces figures, les branches 45 et 47 de la patte de fixation s'appuient, au niveau de la partie d'extrémité spatulée, sur les branches 35 et 37 d'un même brin adjacent de la partie active 3 du fouet.

Dans cette deuxième forme de réalisation, les extrémités libres des brins 30 de la partie active 3 sont légèrement courbés dans une direction donnée par rapport à l'axe du manche 2, tandis que la partie spatulée située à l'extrémité libre 42 de la patte de fixation 4 est courbée dans l'autre direction.

Il est maintenant fait référence aux figures 7A à 7C.

La figure 7A montre en perspective une réalisation particulière du fouet.

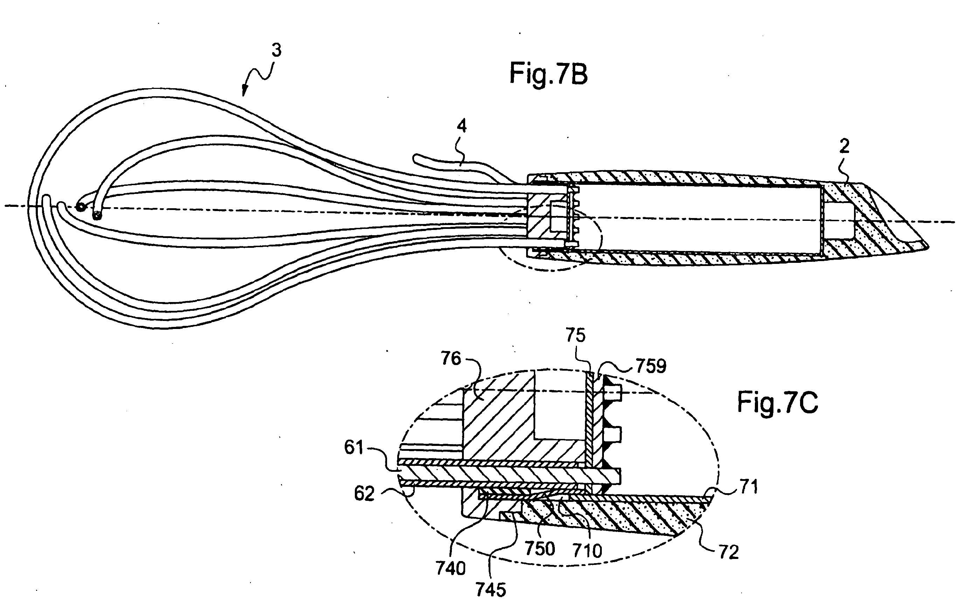

La figure 7B est une vue en coupe longitudinale, pour le manche. Le brin le plus externe est illustré en entier. Tous les autres brins, y compris la patte 4, sont coupés à leur moitié, pour mieux rendre leur disposition. L'écart axial à l'extrémité entre le brin extérieur et le brin adjacent le plus proche est d'au moins 2 mm. Ensuite, l'écart à l'extrémité entre brins adjacents est d'environ 2,5 mm.

La figure 7C illustre un détail de la fixation sur le manche. Elle montre d'abord qu'un brin (de la patte 4 ou de la partie active 3) comprend ici comme âme un fil d'acier 61 de diamètre 1,2 mm environ, âme sur laquelle est surmoulée une gaine de silicone 62 pour aboutir à un diamètre externe de 2,3 mm environ.

Le manche 2 comporte ici un tube métallique 71 formant une âme sur laquelle est surmoulée une gaine 75, qui définit le profil de la zone de préhension du manche 2. Comme l'indique la figure 7B, la longueur du tube d'acier est ici de 104,5 mm. Du côté de l'extrémité du manche, le tube d'acier va jusqu'à la paroi interne du fond 282 du racloir, de sorte que celui-ci résiste bien aux efforts de raclage.

De l'autre côté, le tube 71 comporte des ouvertures (710) qui servent à loger des ergots (tels que le détail 750) estampés sur la couronne axiale d'une embase 75 en forme de U dont la concavité est tournée vers la partie active 3. L'extrémité 740 du tube et celle de la gaine 72 définissent un retrait alvéolaire annulaire 745, qui sert au collage d'un insert de silicone 76, qui forme bouchon de couverture étanche pour l'ensemble de la fixation.

Cela sert à la fixation des brins, dont l'un est traversé axialement par la vue en coupe. La structure 61,62 de ce brin a déjà été décrite. L'embase métallique 75 est ajustée au diamètre intérieur du manche 2. Elle est renforcée dans sa partie radiale d'un disque 759 soudé sur elle. La cloison radiale de l'embase 75 et son disque 759 sont prépercés de façon à recevoir l'extrémité libre du brin, dégagé de sa gaine de silicone, tandis que le bouchon de silicone 76 est pré-percé de façon homologue pour recevoir et loger le brin, avec sa gaine de silicone. Les âmes des brins sont soudées au disque 759 du côté de l'intérieur du manche. Le montage est le suivant :
- préperçage de l'embase 75 et du bouchon 76, montés l'un sur l'autre, pour tous les logements de brins,
- insertion des brins préalablement dénudés à leur extrémité jusqu'à dépasser un peu de l'embase et soudage des brins sur l'embase,
- montage de cet ensemble sur le retrait annulaire 745, jusqu'au clipsage en 710, puis collage. L'étanchéité de l'assemblage est réalisé par ce collage des pièces silicone (manche et embase).

Ce montage est solide, indémontable, et procure une excellent étanchéité, vis-à-vis de l'intérieur du manche. Ceci est particulièrement avantageux à divers titres, qui vont des applications culinaires de l'ustensile, à son lavage en lave vaisselle. Toutefois, le montage pourrait être rendu amovible, dans des applications où l'étanchéité ne serait pas nécessaire.

De plus, le coût et le temps de fabrication du fouet de l'invention restent analogues à ceux d'un fouet classique.

Le fouet 1 de l'invention présente une structure simple, et est facile d'utilisation. Pour le fixer au récipient, l'utilisateur glisse le fouet de haut en bas sur le rebord du récipient de sorte que ce dernier vienne se loger entre la patte de fixation 4 et la partie active 3 du fouet. La patte vient alors enserrer d'elle-même le récipient grâce à son rappel élastique. En position de fixation, la patte 4 est à l'extérieur du récipient tandis que la partie active du fouet s'étend à l'intérieur du récipient, sans toucher le mélange (par exemple de type émulsion) qui se trouve au fond du récipient. Ainsi, la quantité de mélange qui a adhéré au fouet 1, lors d'une précédente utilisation, peut s'écouler directement dans le récipient 6 dans la position de fixation du fouet. Il n'y a donc ainsi ni perte du mélange préparé, ni écoulement salissant sur la surface de support du récipient. Par ailleurs, le fouet est maintenu de manière efficace, ce qui évite qu'il ne tombe dans le récipient 6. Et tout ceci vaut, avec le même fouet, pour de nombreux type de mélanges et de nombreuses formes de récipients.

Pour retirer le fouet 1 du récipient, l'utilisateur tire simplement le fouet 1 par le manche 2 vers le haut. Il peut ensuite le réutiliser à son gré.

La patte de fixation 4 de l'invention présente en outre un encombrement faible avec des surfaces cachées moindres, ce qui facilite son nettoyage. Du fait de sa faible longueur, la patte de fixation ne génère aucune interférence avec les brins de la partie active et ne réduit donc pas les performances du fouet. Par ailleurs, la patte de fixation 4 s'étend uniquement au niveau de la partie active du fouet de sorte qu'elle ne perturbe pas la maniabilité du manche du fouet, en utilisation.

Le fouet 1 de l'invention se présente en un seul bloc dans lequel la patte de fixation 4 a une forme qui s'intègre harmonieusement à celle de la partie active 3. Il peut donc être rangé et utilisé de la même manière qu'un fouet classique.

Le fouet 1 de l'invention n'est pas nécessairement limité aux applications culinaires. Par exemple, il pourrait être utilisé pour mélanger de la peinture ou de la colle, dans un pot. Toutefois, les contraintes d'utilisation ne sont plus toutes les mêmes, dans ce cas.

L'invention n'est pas limitée aux formes de réalisation décrites ci-dessus à titre d'exemples non limitatifs.

Ainsi, la partie active peut avoir une forme générale différente, symétrique ou non, et comporter tout nombre adapté de brins 30. Par ailleurs, on peut utiliser, au lieu des brins en boucle, des demi-brins, droits ou non, qui peuvent être munis de petites masselotes à leur extrémité libre.

La patte de fixation 4 peut être constituée de différents matériaux adaptés pour permettre de produire un rappel élastique entre l'extrémité libre 42 de la patte 4 et la partie active 3 du fouet. On préfère actuellement un acier et/ou un polymère culinaire, ou naturellement le matériau silicone décrit plus haut.

Le manche peut être constitué de différents matériaux adaptés. En particulier le manche 2 peut être au moins partiellement constitué de matériau silicone tel que du caoutchouc silicone. En variante, on pourrait envisager d'utiliser d'autres matériaux, tels que des matières synthétiques et/ou des polymères pour usages culinaires, ou encore un matériau élastomère organique dit TPR (pour Thermo-Plastic Rubber), ou encore du métal.

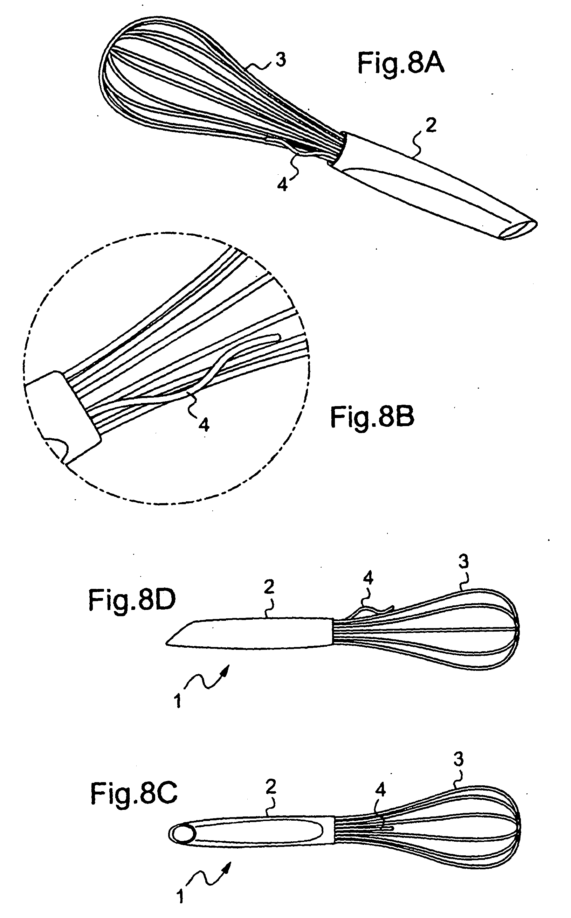

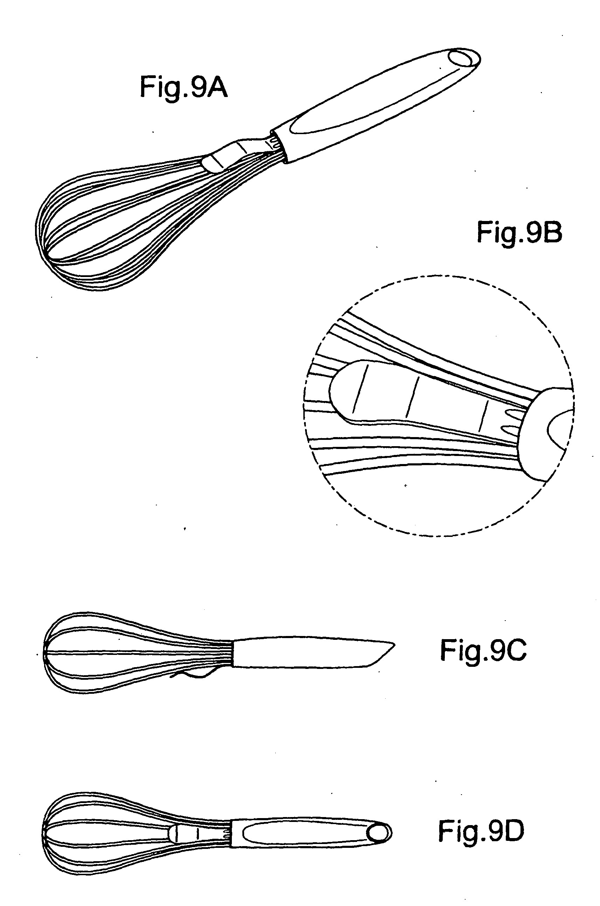

Deux autres variantes de réalisation de la patte 4 seront maintenant présentées, en référence aux groupes de figures 8 et 9. Ces figures ne reprennent que les références numériques les plus générales, pour éviter de surcharger le dessin. En dehors de la patte 4, le montage peut être le même que précédemment.

Sur les figures 8A à 8D, la patte est formée d'un seul brin coupé à son extrémité côté partie active du fouet. En fait, ce brin unique correspond à un demi-brin des modes de réalisations précédents, redressé à son extrémité pour être sensiblement entièrement contenu dans un plan radial. Bien que ce brin puisse venir toucher l'une des autres brins, on considère actuellement comme préférable qu'il se place à mi-chemin entre deux brins actifs, pour travailler en rappel élastique sur l'enveloppe géométrique des brins actifs, telle que la définit un arc du pourtour d'un récipient.

Sur les figures 9A à 9D, la patte est formée d'une lèvre monobloc en métal, dont le pourtour est semblable à celui de la patte en boucle décrite plus haut. Côté manche, la fixation peut se faire par une découpe en fourche de cette patte monobloc, les deux branches de la fourche étant fixées comme l'étaient les brins dans les autres modes de réalisation. La patte et/ou sa fourche peuvent être gainés de silicone.

## Revendications

1. Fouet, notamment à usage culinaire, comprenant un manche (2) et une partie active (3) de forme générale sensiblement piriforme, montée sur le manche, et comprenant des brins (30) distribués, **caractérisé en ce qu'**il comporte une patte de fixation (4) montée sur le manche, possédant une partie d'extrémité spatulée, au niveau de son extrémité libre (42), qui vient sensiblement en appui sur la partie active (3) du fouet, et **en ce que** la patte de fixation présente entre ses deux extrémités une forme coudée (40) dont 1. concavité est tournée vers l'intérieur du fouet.

2. Fouet selon la revendication 1, **caractérisé en ce que** la patte de fixation (4) est conformée et fixée pour produire un rappel élastique avec des caractéristiques choisies d'élasticité et de flexibilité entre son extrémité libre et la partie active du fouet, ou l'enveloppe géométrique de celle-ci.

3. Fouet selon la revendication 2, **caractérisé en ce que** lesdites caractéristiques d'élasticité et de flexibilité de la patte de fixation (4) sont choisies compte tenu de la rigidité en flexion de la partie active du fouet, au voisinage de l'extrémité libre de la patte.

4. Fouet selon l'une des revendications 1 à 3, **caractérisé en ce que** la patte de fixation (4) se présente sous la forme d'un brin court replié de manière à former une boucle sur son extrémité libre (42).

5. Fouet selon la revendication 4, **caractérisée en ce que** la patte de fixation (4) comprend deux branches sensiblement parallèles (45,47).

6. Fouet selon la revendication 5, **caractérisé en ce que** la patte de fixation (4) est formée d'une pièce pleine.

7. Fouet selon l'une des revendications précédentes, **caractérisée en ce que** l'extrémité libre (42) de la patte de fixation est recourbée vers l'extérieur du fouet (1).

8. Fouet selon l'une des revendications précédentes, **caractérisée en ce que** la partie d'extrémité spatulée de la patte de fixation s'appuie sur au moins un brin (35, 37) du faisceau.

9. Fouet selon l'une des revendications précédentes, **caractérisé en ce que** la patte de fixation (4) est au moins partiellement constituée du même matériau que lesdits brins (30) du faisceau.

10. Fouet selon l'une des revendications précédentes **caractérisé en ce que** le manche est au moins partiellement réalisé en matériau silicone, tel que du caoutchouc silicone.

11. Fouet selon l'une des revendications précédentes, **caractérisé en ce que** l'extrémité libre du manche (2) est creusée en forme de spatule ou racloir à bords périphériques francs.

12. Fouet selon l'une des revendications précédentes, **caractérisé en ce que** les brins de faisceau (30) et la patte de fixation (4) sont tenus dans le manche par encliquetage, soudage et/ou collage.

13. Fouet selon l'une des revendications précédentes, **caractérisé en ce que** les brins (30) du faisceau sont distribués radialement autour de l'axe du manche (2) et **en ce que** la partie d'extrémité spatulée de la patte de fixation (4) s'appuie sur les branches adjacentes (35, 37) de deux brins distincts.

14. Fouet selon l'une des revendications 1 à 13, **caractérisé en ce que** les brins (30) du faisceau sont distribués dans des plans verticaux passant par l'axe du manche et parallèles entre eux et **en ce que** la partie d'extrémité spatulée de la patte de fixation (4) s'appuie sur les branches adjacentes d'un même brin (42).

## Claims

1. A whisk, in particular for culinary use comprising a handle (2), an active part (3) with a predominately pear-shaped general shape mounted on the handle and having distributed shafts **characterized in that** it comprises an attachment clip (4) mounted on the handle and having a spatula-shaped end part at a free end (12) of the attachment clip, the end part of the attachment clip contacting the active part (3), and **in that** the attachment clip has between its two ends an angled shape (40) which concavity is turned towards an inside of the whisk.

2. The whisk according to claim 1, **characterized in that** the attachment clip (4) is shaped and attached to produce an elastic return force with predetermined elasticity and flexibility features between the free end of the attachment clip and the active part of the whisk, or the geometrical envelope of thereof.

3. The whisk according to claim 2, **characterized in that** said features of elasticity and flexibility of the attachment clip (4) are a function of the stiffness in flexure of the active part of the whisk near the free end of the clip.

4. The whisk according to any of claims 1 to 3, **characterized in that** the attachment clip (4) has a shape of a short shaft folded back to form a loop on its free end (42).

5. The whisk according to claim 4, **characterized in that** the attachment clip (4) comprises two substantially parallel branches (45, 47).

6. The whisk according to claim 5, **characterized in that** the attachment clip (4) is formed from a solid part.

7. The whisk according to any of the preceding claims, **characterized in that** the free end (42) of the attachment clip (4) is curved back towards the outside of the whisk (1).

8. The whisk according to any of the preceding claims, **characterized in that** the spatula-shaped end part of the attachment clip rests against at least one shaft (35, 37) of the active part.

9. The whisk according to any of the preceding claims, **characterized in that** the attachment clip (4) is at least partially made of the same material as the shafts (30) of the active part.

10. The whisk according to any preceding claims, **characterized in that** the handle is at least partially implemented in silicone material, such as silicone rubber.

11. The whisk according to any of the preceding claims, **characterized in that** the free end of the handle (2) has a hollowed spatula or scraper shape with raw peripheral edges.

12. The whisk according to any of the preceding claims, **characterized in that** the shafts (30) of the active part and the attachment clip (4) are fixed to the handle by latching, welding and gluing.

13. The whisk according to any of the preceding claims, **characterized in that** the shafts (30) of the active part are distributed radially around the axis (2) of the handle, and **in that** the spatula-shaped end part of the attachment clip (4) rests on the proximal branches (35, 37) of two distinct shafts.

14. The whisk according to any of the preceding claims, **characterized in that** the shafts (30) of the active part are distributed in vertical planes that entered through an axis of the handle and that are parallel to each other, and the spatula-shaped end part of the attachment clip (4) rests on the proximal branches of a single shaft (42).

## Patentansprüche

1. Rührbesen, insbesondere für den Küchengebrauch, mit einem Handgriff (2) und einem aktiven Bereich (3) von allgemeiner Piriform, der an dem Handgriff angebracht ist, und mit verteilten Einzeldrähten (30), **dadurch gekennzeichnet, dass** er eine Befestigungslasche (4) aufweist, die an dem Handgriff angebracht ist, welche einen spatelförmigen Endabschnitt auf der Höhe ihres freien Endes (42) aufweist, der im Wesentlichen in Anschlag auf den aktiven Abschnitt (3) des Rührbesens kommt, und dass die Befestigungslasche zwischen ihren beiden Ende eine gebogene Form (40) aufweist, deren Konkavität nach dem Inneren des Rührbesens gedreht ist.

2. Rührbesen nach Anspruch 1, **dadurch gekennzeichnet, dass** die Befestigungslasche (4) so ausgebildet und befestigt ist, um eine elastische Druckkraft mit gewählten Elastizitäts- und Biegsamkeitseigenschaften zwischen ihrem freien Ende und dem aktiven Abschnitt des Rührbesens, oder der geometrischen Hülle von diesem zu erzeugen.

3. Rührbesen nach Anspruch 2, **dadurch gekennzeichnet, dass** die genannten Elastizitäts- und Biegsamkeitseigenschaften der Befestigungslasche (4) unter Berücksichtigung der Biegesteifigkeit des aktiven Abschnitts des Rührbesens, benachbart zum freien Ende der Lasche, gewählt sind.

4. Rührbesen nach einem der Ansprüche 1 bis 3, **dadurch gekennzeichnet, dass** die Befestigungslasche (4) die Form eines kurzen Einzeldrahts aufweist, der derart umgebogen ist, dass er einen Bogen an seinem freien Ende (42) bildet.

5. Rührbesen nach Anspruch 4, **dadurch gekennzeichnet, dass** die Befestigungslasche (4) zwei im Wesentlichen parallele Arme (45, 47) aufweist.

6. Rührbesen nach Anspruch 5, **dadurch gekennzeichnet, dass** die Befestigungslasche (4) aus einem Vollstück gebildet ist.

7. Rührbesen nach einem der vorhergehenden Ansprüche, **dadurch gekennzeichnet, dass** das freie Ende (42) der Befestigungslasche nach dem Äußeren des Rührbesens (1) gekrümmt ist.

8. Rührbesen nach einem der vorhergehenden Ansprüche, **dadurch gekennzeichnet, dass** der spatelförmige Endabschnitt der Befestigungslasche wenigstens gegen einen Einzeldraht (35, 37) des Bündels drückt.

9. Rührbesen nach einem der vorhergehenden Ansprüche, **dadurch gekennzeichnet, dass** die Befestigungslasche (4) wenigstens teilweise aus demselben Material wie die Einzeldrähte (30) des Bündels ausgebildet ist.

10. Rührbesen nach einem der vorhergehenden Ansprüche, **dadurch gekennzeichnet, dass** der Handgriff wenigstens teilweise aus Silikonmaterial gebildet ist, wie beispielsweise Silikonkautschuk.

11. Rührbesen nach einem der vorhergehenden Ansprüche, **dadurch gekennzeichnet, dass** das freie Ende des Handgriffs (2) in Form einer Schaufel oder eines Rechens mit freien Umfangsrändern vertieft ist.

12. Rührbesen nach einem der vorhergehenden Ansprüche, **dadurch gekennzeichnet, dass** die Einzeldrähte des Bündels (30) und die Befestigungslasche (4) in den Griff durch Einklinken, Schweißen und/oder Kleben gehalten sind.

13. Rührbesen nach einem der vorhergehenden Ansprüche, **dadurch gekennzeichnet, dass** die Einzeldrähte (30) des Bündels radial um die Achse des Griffs (2) verteilt angeordnet sind, und dass der spatelförmige Endabschnitt der Befestigungslasche (4) sich auf den benachbarten Armen (35, 37) der beiden benachbarten Einzeldrähte abstützt.

14. Rührbesen nach einem der Ansprüche 1 bis 13, **dadurch gekennzeichnet, dass** die Einzeldrähte (30) des Bündels in vertikalen Ebenen verteilt angeordnet sind, die sich durch die Achse des Griff und parallel untereinander erstrecken, und dass der spatelförmige Endabschnitt der Befestigungslasche (4) sich auf den benachbarten Armen eines selben Einzeldrahts (42) abstützt.
